# EUROPEAN PATENT APPLICATION

(11) **EP 3 470 253 A1**
(43) Date of publication of application: **17.04.2019**
(21) Application number: 18192996.9
(22) Date of filing: 06.09.2018
(51) Int. Cl.: B60K 15/03

(54) **FUEL TANK**

(30) Priority: 12.10.2017 JP 2017198785
(71) Applicant: TOYOTA JIDOSHA KABUSHIKI KAISHA, Toyota-shi, Aichi-ken, 471-8571 (JP)
(72) Inventor: AMANO, Shinsuke, Toyota-shi, Aichi-ken,, 471-8571 (JP); NAGASE, Yuuki, Toyota-shi, Aichi-ken, 471-8510 (JP)
(74) Representative: Kuhnen & Wacker Patent- und Rechtsanwaltsbüro PartG mbB

(57) **Abstract**

A fuel tank made of resin includes: a fuel tank main body enclosed by a bottom wall, side walls, and a top wall, and configured to internally store fuel, the fuel tank main body including a pair of storage portions and a joining portion, the joining portion enables the pair of storage portions to mutually communicate with each other, and a distance from the bottom wall to the top wall of the joining portion is shorter than in the storage portions; and plural stand-offs formed at the joining portion by bonding together a portion of the top wall and a portion of the bottom wall.

## Description

### BACKGROUND

### Technical Field

The present disclosure relates to a fuel tank.

### Related Art

What is known as a saddle-type fuel tank, which is provided underneath a floor panel or the like, and is disposed so as to straddle an exhaust pipe, is used as fuel tank. A saddle-type fuel tank of this type has a pair of storage portions provided on the left and right an exhaust pipe, and a joining portion that is disposed above the exhaust pipe and joins (i.e., connects) together the pair of storage portions (see, for example, Japanese Unexamined Utility Model Application, First Publication No. H03-088829).

In a resin-molding a saddle-type fuel tank of this type, since the shape thereof is flat, there is a concern that a top wall and a bottom wall will be severely deformed due to changes in the internal pressure inside the fuel tank and the like. In order to suppress deformation of this type, improving the bending rigidity of the top wall and bottom wall by forming stand-offs in which a portion of the top wall and the bottom wall are partially bonded together may be considered.

Alternatively, suppressing deformation of the top wall and bottom wall by providing support pillars between the top wall and bottom wall of a fuel tank may also be considered.

Note that stand-offs are formed by forming truncated cone-shaped recessed portions respectively in the top wall and the bottom wall, and then bonding together apex surfaces of these truncated cones. Accordingly, in a saddle-type fuel tank, if stand-offs are formed in the storage portions where the top wall and bottom wall are further from each other than in the joining portion, then the drawback arises that the volume of the recessed portions increases, so that the capacity of the fuel tank is considerably decreased. Additionally, since the total surface area of the tank wall surfaces is greatly increased, the mass of the tank increases.

On the other hand, in a case in which support pillars are provided between the top wall and bottom wall of a fuel tank, it may become difficult to suppress deformation of the tank wall surfaces between the support pillars. In a case in which the number of support pillars is increased, manufacturing costs increases, and may not suppress reduction in the capacity of a fuel tank.

### SUMMARY

The present disclosure provides a fuel tank that may suppress deformation of a saddle-type resin fuel tank, and that may ensures sufficient fuel capacity.

A first aspect of the present disclosure is a fuel tank made of resin including: a fuel tank main body enclosed by a bottom wall, side walls, and a top wall, and configured to internally store fuel, the fuel tank main body including a pair of storage portions and a joining portion, the joining portion enables the pair of storage portions to mutually communicate with each other, and a distance from the bottom wall to the top wall of the joining portion is shorter than in the storage portions; and plural stand-offs formed at the joining portion by bonding together a portion of the top wall and a portion of the bottom wall.

The resin fuel tank formed in this manner is what is known as a saddle-type fuel tank that has a pair of storage portions, and a joining portion. The joining portion joins the storage portions together and the distance between a top wall and a bottom wall is smaller than in the storage portions.

In this fuel tank, stand-offs are formed in the joining portion of the fuel tank main body by partially bonding the top wall and the bottom wall together. Accordingly, even in a case in which the internal pressure inside the fuel tank main body changes, since the top wall and the bottom wall of the joining portion are bonded together in portions by the stand-offs, deformation of the top wall and bottom wall is suppressed. Moreover, the stand-offs are formed in the joining portion where the distance between the top wall and bottom wall is shorter than in the storage portions. Accordingly, the volume of the recessed portions formed in the top wall and bottom wall by the stand-offs is relatively less. As a result, the first aspect of the present disclosure may suppress a reduction in the capacity of the fuel tank resulting from the formation of the stand-offs.

In a second aspect of the present disclosure, in the above-described aspect, support pillars that respectively connect together the top wall and bottom wall may be provided at at least one of the storage portions.

In a saddle-type fuel tank formed in this manner, support pillars that connect the top wall and bottom wall together are provided in at least one storage portion. Accordingly, deformation of the top wall and bottom wall in at least one storage portion, due to changes in the internal pressure inside the fuel tank main body, is suppressed. Moreover, in the storage portions, the top wall and bottom wall are relatively further from each other, compared to the connecting portion. However, since the top wall and bottom wall are connected together by the support pillars, any reduction in the volume of the fuel tank main body resulting from the provision of the support pillars is suppressed, compared with a case in which stand-off molding is used.

In other words, in a fuel tank, deformation of the top wall and bottom wall is suppressed, and at the same time, any increase in manufacturing costs is suppressed by molding stand-offs in portions where the top wall and bottom wall are relatively close together, such as in the connecting portion. In addition to this, by providing support pillars in portions where the top wall and bottom wall are relatively far apart, such as in the storage portions, deformation of the top wall and bottom wall may be suppressed while any reduction in the capacity of the fuel tank main body caused by the support pillar provision may also be suppressed.

In a third aspect of the present disclosure, in the above-described second aspect, an aperture portion may be formed at the top wall of at least one of the storage portions, and a metal plate extending alongside the aperture portion may be insert-molded in the top wall, and a pair of support pillars may be provided to sandwich the aperture portion when seen in plan view.

In a fuel tank formed in this manner, an aperture portion is formed in the top wall of at least one storage portion. Since a metal plate that extends along the aperture portion is insert-molded in this top wall, the bending rigidity thereof is relatively higher compared to other portions of the fuel tank main body. Therefore, by providing the pair of support pillars on either side, sandwiching the aperture portion (i.e., the metal plate) when viewing the fuel tank main body in plan view, deformation of the top wall between the support pillars may be suppressed.

In a fourth aspect of the present disclosure, in the above-described third aspect, in a case in which the fuel tank is mounted in a vehicle, a vertical wall that extends to a vehicle lower side from the metal plate may be formed at the vehicle lower side of the aperture portion, and a support pillar may be positioned at the vehicle lower side of the vertical wall.

In a saddle-type fuel tank formed in this manner, the metal plate that extends alongside the aperture portion in the top wall of the storage portion is insert-molded in which the aperture portion is formed. In a case in which the fuel tank is mounted in a vehicle, a vertical wall is formed on the vehicle lower side of this metal plate, and a support pillar is positioned on the vehicle lower side of this vertical wall. Accordingly, the metal plate is supported on the support pillar via the vertical wall. As a result of the metal plate being provided in this manner, deformation of the top wall of the fuel tank containing the metal plate may be suppressed even further.

Note that, here, the term 'extends to a vehicle lower side from the metal plate' includes the meaning 'extends to a vehicle lower side from a resin portion where the metal plate is insert-molded'. Additionally, the term 'the support pillar is positioned on the vehicle lower side of this vertical wall' includes the meaning 'a mounting portion connected to the support pillar is positioned on the vehicle lower side of this vertical wall'.

In a fifth aspect of the present disclosure, in the above-described second to fourth aspects, the support pillar may be formed in a cylindrical shape, and communicating holes that enable an internal portion of the support pillar to communicate with the storage portion may be formed at an outer circumferential surface of the support pillar.

In a fuel tank formed in this manner, the support pillar that is provided between the top wall and the bottom wall of a storage portion is cylindrical, and communicating holes that enable an internal portion of the support pillar to communicate with the storage portion are formed in an outer circumferential surface of the support pillar. Accordingly, fuel can also be stored in the interior of the support pillar, and any reduction in the capacity of the fuel tank main body caused by the provision of the support pillar in the fuel tank main body (i.e., in the storage portions) may be suppressed even further.

### BRIEF DESCRIPTION OF THE DRAWINGS

Exemplary embodiments will be described in detail based on the following figures, wherein:
FIG. 1 is a cross-sectional view taken along a line A-A in FIG. 2;
FIG. 2 is a top view of a fuel tank according to an exemplary embodiment of the present disclosure;
FIG. 3 is a cross-sectional view taken along a line B-B in FIG. 2;
FIG. 4 is a view schematically illustrating a cross-section taken along a line C-C in FIG. 2; and
FIG. 5 is a front view illustrating a support pillar according to an exemplary embodiment of the present disclosure.

### DETAILED DESCRIPTION

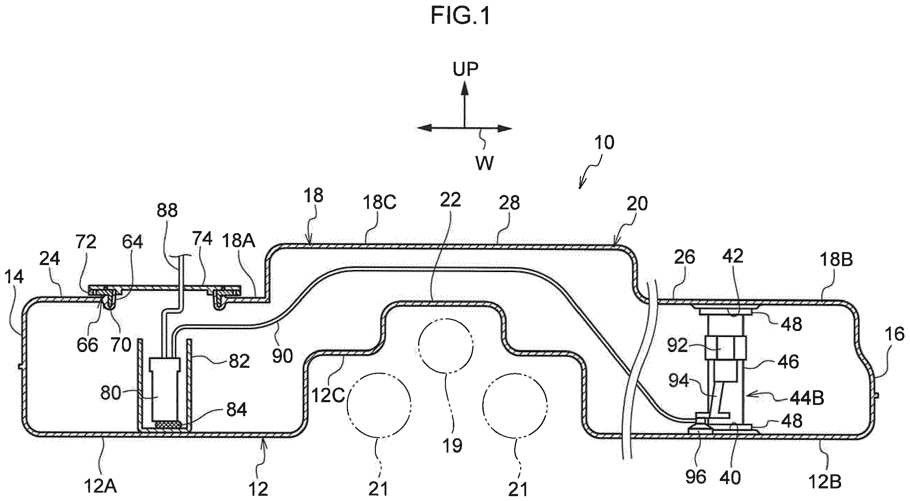

A fuel tank according to an exemplary embodiment of the present disclosure will now be described with reference to FIG. 1 through FIG. 5. In the following description, in the relevant drawings, a vehicle front side, a vehicle upper side, and a vehicle width direction is indicated respectively by an arrow FR, an arrow UP, and arrows W.

Firstly, an overall structure of a fuel tank 10 will be described with reference to FIG. 1. The fuel tank 10 has a fuel tank main body 20 that is provided with a bottom wall 12 that extends in a vehicle width direction, a left wall 14 and a right wall 16 that extend towards the vehicle upper side from both end portions in the vehicle width direction of the bottom floor 12, and a top wall 18 that extends in the vehicle width direction so as to connect together upper ends of the left wall 14 and the right wall 16. The fuel tank main body 20 is enclosed by the bottom wall 12, side walls including the left wall 14 and the right wall 16, and the top wall 18, and is consequently able to store fuel internally.

A protruding portion 22 that protrudes towards the vehicle upper side is provided in a central portion in the vehicle width direction of the bottom wall 12 in order to avoid a drive shaft 19 and exhaust pipes 21 of the vehicle. In other words, this fuel tank 10 is what is known as a saddle-type fuel tank. Furthermore, the fuel tank 10 is a resin fuel tank that has been molded from resin.

An interior of the fuel tank main body 20 is divided into a first storage portion 24, a second storage portion 26, and a joining portion 28. The first storage portion 24 is positioned on the left side in the vehicle transverse direction of the protruding portion 22. The second storage portion 26 is positioned on the right side in the vehicle transverse direction thereof. The joining portion 28 joins the first storage portion 24 and the second storage portion 26 together.

Note that portions of the bottom wall 12 and the top wall 18 that form the first storage portion 24 are referred to respectively as a first bottom wall portion 12A and a first top wall portion 18A, while portions thereof that form the second storage portion 26 are referred to respectively as a second bottom wall portion 12B and a second top wall portion 18B, and portions thereof that form the joining portion 28 are referred to respectively as a third bottom wall portion 12C and a third top wall portion 18C.

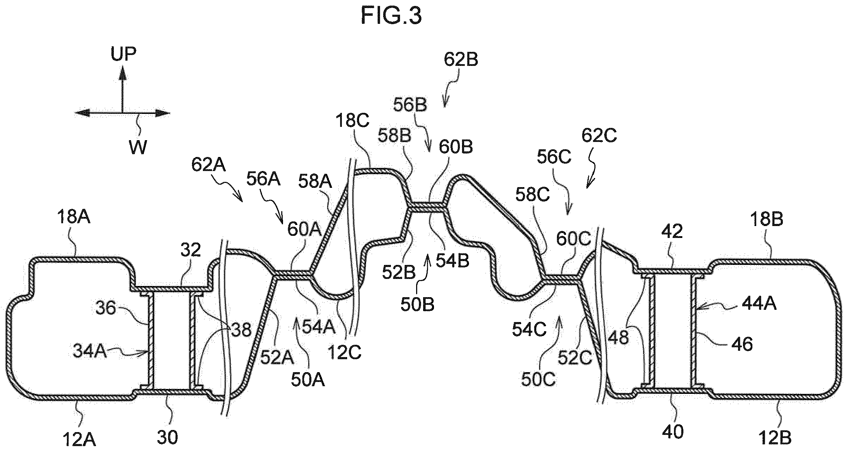

As illustrated in FIG. 3, a mounting portion 30 that protrudes towards a vehicle upper side is formed in the first bottom wall portion 12A. Additionally, a mounting portion 32 that protrudes towards a vehicle lower side is formed at a position corresponding to the mounting portion 30 in the first top wall portion 18A. A support pillar 34A that extends in the vehicle up-down direction is provided between the mounting portions 30 and 32.

The support pillar 34A has a support pillar main body 36 which has a substantially circular cylinder shape, and flanges 38 that are formed protruding outwards in a radial direction at both end portions of the support pillar main body 36. These flange portions 38 are joined to the respective mounting portions 30 and 32 so that the support pillar 34A is positioned between the top wall portion 18A and the bottom wall portion 12A.

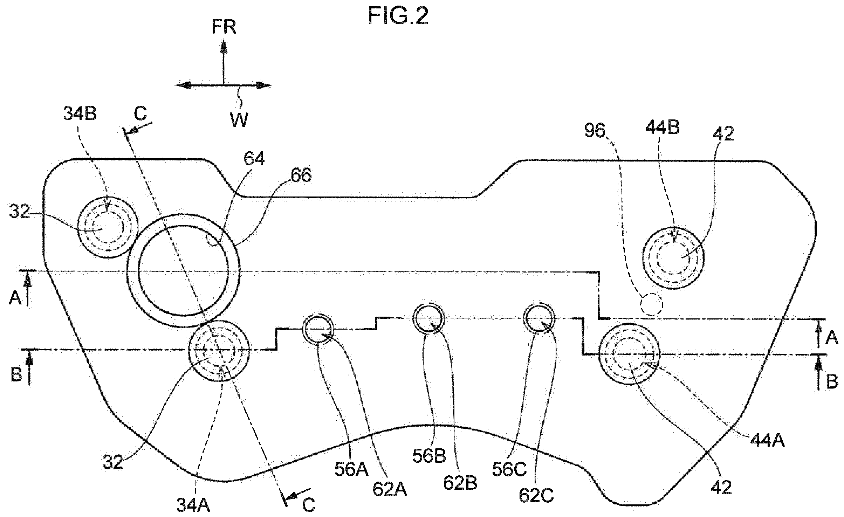

As illustrated in FIG. 2, when seen in plan view, in the first storage portion 24, the support pillar 34A is disposed on a vehicle rear side, while a support pillar 34B is disposed opposite this on the vehicle front side so as to sandwich a mounting hole portion 64 (described below).

As illustrated in FIG. 1 through FIG. 3, in the same way as in the first storage portion 24, a pair of support pillars 44A and 44B that extend in the vehicle up-down direction between mounting portions 40 and 42 are also provided between the second bottom wall portion 12B and the second top wall portion 18B of the second storage portion 26. As illustrated in FIG. 1 through FIG. 3, in the same way as the support pillars 34A and 34B, each support pillar 44A and 44B also has a support pillar main body 46 which has a substantially circular cylinder shape, and flanges 48 that are formed protruding outwards in a radial direction at both end portions of the support pillar main body 46. These flange portions 48 are joined to the respective mounting portions 40 and 42 so that the support pillars 44A and 44B are positioned between the second top wall portion 18B and the second bottom wall portion 12B.

As illustrated in FIG. 2, when seen in plan view, the pair of support pillars 44A and 44B are disposed in the second storage portion 26 so as to sandwich a filter 96 (described below).

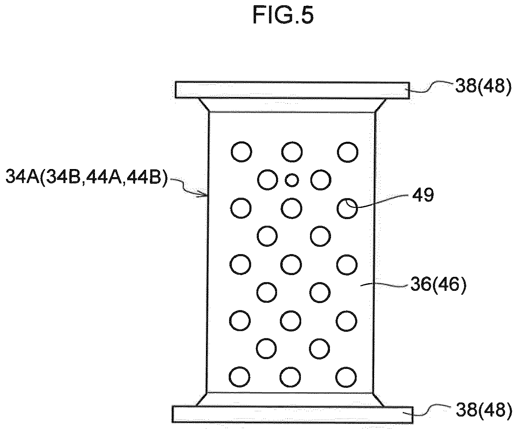

Note that, as illustrated in FIG. 5, the support pillar main bodies 36 and 46 of the support pillars 34A, 34B, 44A, and 44B are each formed in a substantially circular cylinder shape. Communicating holes 49 that enable an internal portion to communicate with external portions are formed in an outer circumferential surface of the support pillar main bodies 36 and 46.

Furthermore, as illustrated in FIG. 3, truncated cone-shaped protruding portions 50A through 50C that protrude towards the vehicle upper side are formed in three locations in the third bottom wall portion 12C of the joining portion 28. Each protruding portion 50A though 50C has a sloping surface 52A through 52C that respectively form the substantially truncated cone shape, and upper end surfaces 54A through 54C.

Furthermore, as illustrated in FIG. 2 and FIG. 3, truncated cone-shaped protruding portions 56A through 56C that protrude towards the vehicle lower side are formed in three locations in the third top wall portion 18C. Each protruding portion 56A though 56C has a sloping surface 58A through 58C that respectively form the substantially truncated cone shape, and lower end surfaces 60A through 60C.

These upper end surfaces 54A through 54C of the protruding portions 50A through 50C and lower end surfaces 60A through 60C of the protruding portions 56A through 56C are bonded together respectively so as to form stand-offs 62A through 62C. In other words, in the joining portion 28, the stand-offs 62A through 62C are formed in three locations at predetermined distances from each other in the vehicle width direction.

Moreover, as illustrated in FIG. 1, the mounting hole portion 64 that enables built-in components of the fuel tank 10 to be mounted in the interior of the fuel tank main body 20 is formed in the first top wall portion 18A of the first storage portion 24.

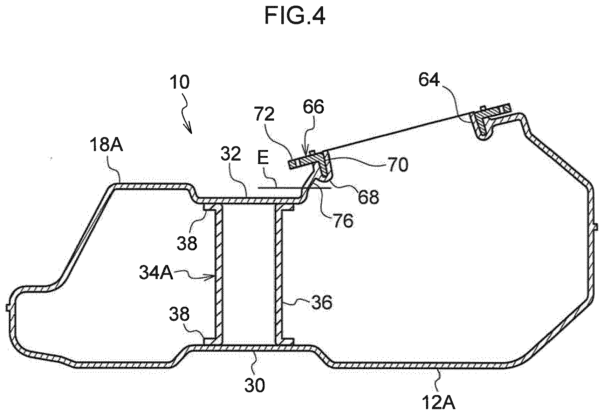

The mounting hole portion 64, which is an aperture portion, is formed slightly towards the vehicle front side of the center of the first top wall portion 18A. As illustrated in FIG. 1 and FIG. 4, the mounting hole portion 64 has a circular cylinder-shaped supporting portion 68 that forms part of the first top wall portion 18A, and a metal insert ring 66 that is insert-molded in the supporting portion 68.

As illustrated in FIG. 4, the insert ring 66 has a circular cylinder-shaped circular cylinder portion 70 that is insert-molded in the supporting portion 68, and a flange portion 72 that is formed so as to protrude outwards in a radial direction from an upper end of the circular cylinder portion 70. In other words, the insert ring 66 is formed extending alongside the mounting hole portion 64 (i.e., the supporting portion 68).

As illustrated in FIG. 1, a lid body 74 is fitted onto the flange portion 72 of this insert ring 66, and is fastened to the flange portion 72 using metal fittings (not shown in the drawings). As a result, the mounting hole portion 64 is closed off. Note that, in FIG. 4, the lid body 74 and a pump module 80 are omitted from the drawing.

As illustrated in FIG. 2, the insert ring 66 (i.e. the flange portion 72) and the mounting portions 32 are formed so as to be substantially in external contact with each other when seen in plan view. Here, the term "substantially in external contact" includes cases in which, when seen in plan view, the insert ring 66 and the mounting portions 32 are disposed such that they partially overlap each other.

Moreover, as illustrated in FIG. 4, a vertical wall 76 that extends towards the vehicle lower side is formed on the vehicle lower side of the supporting portion 68. The vertical wall 76 is formed so as to continue on from an upper end portion of the truncated cone-shaped mounting portion 32 in the vicinity of the above-described external contact position. In other words, the supporting portion 68, including the insert ring 66, is supported on the support pillar 34A via the vertical wall 76 and the mounting portion 32. Note that, in FIG. 4, the vertical wall 76 is the portion above a boundary line E, while the mounting hole portion 32 is the portion below this boundary line E. Moreover, as illustrated in FIG. 2, the supporting portion 68 is supported in the same way on the support pillar 34B.

Furthermore, as illustrated in FIG. 1, the pump module 80 is disposed on the vehicle lower side of the lid body 74 which is closing off the mounting hole portion 64.

As illustrated in FIG. 1, a sub-cap 82 that is used to maintain the fuel surrounding a filter 84 (described below) at a high liquid level when only a small quantity of fuel is remaining in the fuel tank is disposed on the bottom wall 12 (i.e., the bottom wall portion 12A) on the vehicle lower side of the lid body 74. The filter 84 and the pump module 80 which is disposed on the vehicle upper side of the filter 84 and includes a fuel pump that is used to supply fuel from the fuel tank main body 20 to the engine are disposed inside the sub-cap 82. A fuel supply pipe 88 that extends towards the vehicle upper side from the pump module 80 extends through the lid body 74 to the outside of the fuel tank main body 20.

Additionally, a jet pump and the like (not shown in the drawings) that move fuel from the second storage portion 26 via a fuel line 90 (described below) to the first storage portion 24 are provided inside the sub-cap 82.

In the second storage portion 26, a bracket 92 is attached to the support pillar 44B on the vehicle front side, and the filter 96 to which one end of the fuel line 90 that is used to supply fuel from the second storage portion 26 to the interior of the sub-cap 82 of the first storage portion 24 is connected is disposed at a distal end of an arm 94 that extends from the bracket 92 towards the bottom wall portion 12B.

Next, an operation of the fuel tank 10 will be described.

As illustrated in FIG. 2 and FIG. 3, the stand-offs 62A through 62C are formed in three locations at a predetermined distance from each other in the vehicle width direction in the joining portion 28 of the fuel tank 10. In other words, the upper end surfaces 54A through 54C of the protruding portions 50A through 50C that are formed in three locations on the third bottom wall portion 12C are bonded to the lower end surfaces 60A through 60C of the protruding portions 56A through 56C that are formed in three locations on the third top wall portion 18C.

Accordingly, there is a concern that the bottom wall 12 and the top wall 18 of the resin-molded fuel tank main body 20 (i.e., the joining portion 28) will be deformed by increases and decreases in the fuel vapor pressure inside the fuel tank main body 20 that are caused, for example, by changes in the external air temperature and the like. However, since the third bottom wall portion 12C and the third top wall portion 18C of the joining portion 28 are bonded together in portions by the stand-offs 62A through 62C, deformation of the third bottom wall portion 12C and the third top wall portion 18C is suppressed.

Moreover, unlike cases in which a support pillar is provided in the interior of the joining portion 28 (i.e. between the third bottom wall portion 12C and the third top wall portion 18C), stand-offs can be formed simply by altering the shape of the resin molding, so that any increase in manufacturing costs arising from the formation of the stand-offs is suppressed.

Furthermore, the distance in the up-down direction between the third bottom wall portion 12C and the third top wall portion 18C of the joining portion 28 is relatively shorter compared with the first storage portion 24 and the second storage portion 26. Accordingly, it is possible to suppress a reduction in the capacity of the fuel tank main body 20 that is due to the truncated cone-shaped protruding portions 50A through 50C and 56A through 56C being formed respectively in the third bottom wall portion 12C and the third top wall portion 18C. Additionally, since any increase in the overall surface area of the tank arising from the formation of the stand-offs may be suppressed, increase in the mass of the fuel tank 10 arising from the formation of the stand-offs may also be suppressed.

In contrast, the support pillars 34A and 34B are disposed in the first storage portion 24 of the fuel tank 10. Lower ends and upper ends of the support pillars 34A and 34B are bonded respectively to the mounting portions 30 of the first bottom wall portion 12A and the mounting portions 32 of the first top wall portions 18A.

Accordingly, although there is a concern that the bottom wall 12 and the top wall 18 of the resin-molded fuel tank main body 20 (i.e., the first storage portion 24) will be deformed by increases and decreases in the fuel vapor pressure inside the fuel tank main body 20 that are caused, for example, by changes in the external air temperature and the like, since the first bottom wall portion 12A and the first top wall portion 18A of the first storage portion 24 are joined together (i.e., are supported) in portions by the support pillars 34A and 34B, deformation of the first bottom wall portion 12A and the first top wall portion 18A is suppressed.

Providing stand-offs in order to suppress deformation of the first storage portion 24 may also be considered. However, the distance in the up-down direction between the first bottom wall portion 12A and the first top wall portion 18A in the first storage portion 24 is relatively greater, compared to the distance in the up-down direction between the third bottom wall portion 12C and the third top wall portion 18C in the joining portion 28. Accordingly, if truncated cone-shaped protruding portions are formed respectively in the first bottom wall portion 12A and the first top wall portion 18A, the capacity of the fuel tank main body 20 is greatly reduced. Additionally, the overall surface area of the fuel tank main body 20 is greatly increased, so that the mass of the fuel tank 10 is also increased.

However, in the fuel tank 10 according to the present exemplary embodiment, by providing the substantially circular cylinder-shaped support pillars 34A and 34B in the first storage portion 24, deformation of the first storage portion 24 may be suppressed, and decrease in the capacity and increase in the mass of the fuel tank 10 may also be suppressed.

In particular, as illustrated in FIG. 5, the support pillars 34A and 34B are substantially circular cylinder-shaped, and by forming the communicating holes 49 that enable the interior of the support pillars 34A and 34B to communicate with the exterior thereof in the outer circumferential surface thereof, it is possible for fuel to be stored in the interior of the support pillars 34A and 34B. Accordingly, any decrease in the capacity of the fuel tank 10 arising from the provision of the support pillars may be suppressed even further.

Note that the same types of operation and effects demonstrated in the first storage portion 24 are also obtained by the provision of the support pillars 44A and 44B in the second storage portion 26 as well.

In this way, in the fuel tank 10, by providing the easily manufactured stand-offs 62A through 62C in the joining portion 28 in which the distance between the bottom wall 12 and the top wall 18 is relatively shorter, any increase in manufacturing costs may be suppressed, and deformation of the fuel tank 10 may be suppressed. Further, at the same time, decrease in the capacity and increase in the mass of the fuel tank 10 may also be suppressed. Additionally, in the fuel tank 10, in the first storage portion 24 and the second storage portion 26 in which the distance between the bottom wall 12 and the top wall 18 is relatively longer, deformation of the fuel tank 10 may be suppressed. Further, at the same time, decrease in the capacity and increase in the mass of the fuel tank 10 due to the provision of the support pillars 34A, 34B, 44A, and 44B may also be suppressed.

Moreover, as illustrated in FIG. 2, in the first storage portion 24, the support pillars 34A and 34B are placed on either side, sandwiching the mounting hole portion 64. The metal insert ring 66, which is a metal plate, is insert-molded in the supporting portion 68 forming part of the mounting hole portion 64. Accordingly, the mounting hole portion 64 of the first top wall portion 18A has greater bending rigidity compared to other portions of the first top wall portion 18A. In other words, when seen in plan view, in the first top wall portion 18A, by placing the support pillars 34A and 34B on either side, sandwiching the mounting hole portion 64, the supporting portion 68, which is a portion where the bending rigidity is relatively higher, can be disposed between the support pillars 34A and 34B, so that deformation of the first top wall portion 18A may be suppressed even further.

In the same way, in the first bottom wall portion 12A, since the sub-cap 82 (i.e., the pump module 80) is disposed on the vehicle lower side of the mounting hole portion 64, the bending rigidity of this portion compared to other portions is relatively greater. Accordingly, by providing the support pillars 34A and 34B on either side, sandwiching the sub-cap 82 when seen in plan view (not shown in the drawings), deformation of the first bottom wall portion 12A between the support pillars 34A and 34B may be further suppressed.

Furthermore, as illustrated in FIG. 4, the vertical wall 76 is formed extending from the supporting portion 68 forming part of the mounting hole portion 64 as far as the respective mounting portions 32 to which the support pillars 34A and 34B are connected. As a result, the supporting portion 68 in which the metal insert ring 66, which has a comparatively greater mass compared to resin, is provided can be supported by the support pillars 34A and 34B via the mounting portions 32.

Accordingly, in the first top wall portion 18A, deformation of peripheral portions around the mounting hole portion 64 where there is a greater possibility of deformation occurring due to the provision of the insert ring 66 may be suppressed.

Note that in the fuel tank 10 of the present exemplary embodiment, three stand-offs, namely, the stand-offs 62A through 62C are formed in the joining portion 28. However, the present disclosure is not limited to this. At least one stand-off may be provided, and any number of stand-offs may be used. Furthermore, in the present exemplary embodiment, the three stand-offs 62A through 62C are disposed with a predetermined distance from each other in the vehicle width direction. However, the placement is not limited to this.

Moreover, in the fuel tank 10 of the present exemplary embodiment, two support pillars, namely, the support pillars 34A, 34B, 44A, and 44B are provided in each of the first storage portion 24 and the second storage portion 26. However, the number of support pillars is not limited to this. A different number of support pillars may be provided in each of the first storage portion 24 and the second storage portion 26, or alternatively, support pillars may be provided in only one of the first storage portion 24 or the second storage portion 26.

Furthermore, the fuel tank 10 may be structured such that no support pillars are provided in the first storage portion 24 and the second storage portion 26, and stand-offs are formed only in the joining portion 28.

Moreover, in the present exemplary embodiment a case in which the support pillars 34A, 34B, 44A, and 44B have a circular cylinder shape, has been described. However, the present disclosure is not limited to this. For example, they may also have an elliptical, a triangular, or a square cross-sectional configuration. Additionally, it is preferable that the support pillars 34A, 34B, 44A, and 44B are cylindrical bodies having a hollow interior cavity. However, circular column-shaped bodies of the support pillars may be formed so as to have no hollow interior cavity.

Furthermore, in the fuel tank 10 according to the present exemplary embodiment, a mounting hole portion is not provided in the second storage portion 26. However, a mounting hole portion may be provided therein. In this case, the support pillars 44A and 44B may be disposed so as to sandwich the mounting hole portions, and a vertical wall may be formed in a position underneath an insert ring.

Note that in the present exemplary embodiment, the term 'the support pillars 34A and 34B are placed on either side, sandwiching the mounting hole portion 64 when seen in plan view' means that the support pillars 34A and 34B are positioned on opposite sides sandwiching any radial line that passes through the center of the mounting hole portion 64 when seen in plan view.

Furthermore, the term 'the vertical wall 76 is positioned on the vehicle lower side of the insert ring 66' means that the vertical wall 76 is positioned on the vehicle lower side of the insert ring 66 when seen in plan view.

## Claims

1. A fuel tank (10) made of resin comprising:
a fuel tank main body (20) enclosed by a bottom wall (12), side walls (14, 16), and a top wall (18), and configured to internally store fuel, the fuel tank main body (20) including a pair of storage portions (24, 26) and a joining portion (28), the joining portion (28) enables the pair of storage portions (24, 26) to mutually communicate with each other, and a distance from the bottom wall (12) to the top wall (18) of the joining portion (28) is shorter than in the storage portions (24, 26); and
a plurality of stand-offs (62A, 62B, 62C) formed at the joining portion (28) by bonding together a portion of the top wall (18) and a portion of the bottom wall (12).

2. The fuel tank (10) according to claim 1, wherein support pillars (34A, 34B, 44A, 44B) that respectively connect together the top wall (18) and bottom wall (12) are provided at at least one of the storage portions (24, 26).

3. The fuel tank (10) according to claim 2, wherein an aperture portion (64) is formed at the top wall (18) of at least one of the storage portions (24, 26), and a metal plate (66) extending alongside the aperture portion (64) is insert-molded in the top wall (18), and a pair of support pillars (34A, 34B, 44A, 44B) are provided to sandwich the aperture portion (64) when seen in plan view.

4. The fuel tank (10) according to claim 3, wherein, in a case in which the fuel tank (10) is mounted in a vehicle, a vertical wall (76) that extends to a vehicle lower side from the metal plate (66) is formed at the vehicle lower side of the aperture portion (64), and a support pillar (34A) is positioned at the vehicle lower side of the vertical wall (76).

5. The fuel tank (10) according to any one of claims 2 to claim 4, wherein the support pillar (34A, 34B, 44A, 44B) is formed in a cylindrical shape, and communicating holes (49) that enable an internal portion of the support pillar (34A, 34B, 44A, 44B) to communicate with the storage portion (24, 26) are formed at an outer circumferential surface of the support pillar (34A, 34B, 44A, 44B).
